# EUROPÄISCHE PATENTSCHRIFT

(11) **EP 0 907 323 B1**
(45) Veröffentlichungstag und Bekanntmachung des Hinweises auf die Patenterteilung: **21.08.2002**
(21) Anmeldenummer: 97926904.0
(22) Anmeldetag: 13.06.1997
(51) Int. Cl.: A21D 8/08, A21D 2/16

(54) **VERFAHREN ZUR HERSTELLUNG VON ESSBAREN WAFFEL-PRODUKTEN**
METHOD OF MANUFACTURING EDIBLE WAFFLE PRODUCTS
PROCEDE DE FABRICATION DE PRODUITS GAUFRES COMESTIBLES

(30) Priorität: 13.06.1996 AT 103996
(43) Veröffentlichungstag der Anmeldung: 14.04.1999
(73) Patentinhaber: Franz Haas Waffelmaschinen- Industrie Aktiengesellschaft, 1210 Wien (AT)
(72) Erfinder: HAAS, Franz, sen, A-1210 Wien (AT); HAAS, Johann, A-3400 Klosterneuburg (AT); TIEFENBACHER, Karl, A-1170 Wien (AT)
(74) Vertreter: Puchberger, Rolf
(86) Internationale Anmeldenummer: AT9700128
(87) Internationale Veröffentlichungsnummer: WO97047205

(56) Entgegenhaltungen:
- WO-A-97/00015
- GB-A- 625 683
- GB-A- 670 955
- GB-A- 756 549
- GB-A- 924 268
- US-A- 3 721 570
- US-A- 3 949 094

## Beschreibung

Waffeln werden traditionell als dünnwandige, zu einem wesentlichen Teil durch Wasserdampf gelockerte Backwaren in zwei- oder mehrteiligen Backformen hergestellt (Flach- und Hohlwaffeln, Oblaten, Eistüten, Softwaffeln) bzw. auf Backtrommeln oder Backbändern als Endlosband gebacken (Hohlhippen).

In der Fach- und Patentliteratur finden sich zahlreiche Angaben über typische Rezepte. Diese enthalten neben Weizenmehl und fallweise Stärkemehlen als Hauptrohstoffen durchwegs gewisse Anteile an Ölen/Fetten bzw. an lecithinhaltigen Zutaten (z.B. Flüssig-, Pulverlecithin-, Ei-, oder Sojapräparate). Die beiden letztgenannten Stoffgruppen dienen vor allem dem leichten und sicheren Ablösen des fertig gebackenen Waffelproduktes von der Backformoberfläche. Hiezu einige Literaturbeispiele:
1. E. Winter (1995), ZSW, Zucker- und Süßwaren, 49, 450-2
2. Encyclopaedia of Food Science, Food Technology and Nutrition (1993) Vol 1, 417-20, Academic Press, London
3. D. Manley (1991) Technology of Biscutts, Crackers and Cookies, 2nd Ed., 299-313, Ellis Horwood, New York
4. DE-OS 4042255 A1
5. DE-OS 3912341 A1
6. DD-PS 145196
7. DE-PS 2929496 C2

Das problemlose Entformen solcher Backwaren ist ein wesentliches Kriterium für eine störungsfreie, kontinuierliche Erzeugung, was fallweise sogar zu einem tendenziellen Überdosieren von Stoffen mit Antihaftwirkung führt.

Andererseits ist bekannt, daß verschiedene Lipide, speziell wenn sie ungesättigte Fettsäuren enthalten, wie etwa Lecithin oder die meisten Öle eine Verharzung und Rückstandsbildung auf den Backformen für Waffeln bzw. den Backbändern für Hohlhippen und Kekse und damit deren Verschmutzen im Dauerbetrieb fördern.

Es hat daher nicht an Versuchen gefehlt, andere stabilere und wirksamere Mittel zu finden, vgl. etwa die unter 6. zitierte Patentschrift.

Weiterhin offenbart die GB-A-0 756 549 die Verwendung von wasserlöslichen Salzen, v.a salzen von Stearylcitraten für die Herstellung einer Trennemulsion für die Beschichtung von Backblechen.

Es hat sich nun überraschenderweise gezeigt, daß ein bisher nur vereinzelt als Komplexierungsmittel in Margarinen verwendeter Stoff, nämlich Stearylcitrat, als Teil- und/oder Vollersatz für Lecithin und/oder Öle/Fette in den genannten Backwaren dienen kann und dabei neben der "Antihaftwirkung" offensichtlich noch einen "Reinigungseffekt" auf die Backformen oder zumindest ein Verhindern oder Verringern der beschriebenen Rückstandsbildung bewirken kann.

Dies ist umso überraschender, als der Fachmann aufgrund der freien Säuregruppen des Zitronensäurerestes keine sauren Lebensmittelzusatzstoffe in der Herstellung von Waffeln und anderen Dauerbackwaren einsetzen würde.

Wie die bisher erprobten Rezepte zeigen, ist damit eine Herabsetzung der Anteile oder ein völliger Verzicht auf Lecithin und teilweise oder ganz auch auf Öle und Fette möglich.

Dies erhöht wiederum die Lagerstabilität der Produkte - oxidativ bedingte Ranzidität und

Altgeschmack der auf eine große Produktoberfläche verteilten Lipidanteile - sind heute die wichtigsten Verderbsmechanismen. Eine Mitwirkung des als Synergist und Komplexbildner für Metallspuren bekannten Zitronensäurerestes ist ebenfalls zu vermuten.

Andererseits kann die Backtemperatur erhöht und der Backvorgang damit beschleunigt werden, da das thermisch besonders instabile Lecithin wirkungsvoll ersetzt werden kann.

Bereits bei mäßigen Anteilen dieses Zusatzes kann eine glatte, glanzende Oberfläche der Backformen beobachtet werden, anders als bei vergleichbaren Lecithin- oder Fettdosierungen. Es kann derzeit nur vermutet werden, daß dies mit speziellen emuigierenden Wirkungen dieser Stoffe oder aber mit einer Oberflächenanreicherung nach Art eines echten Formtrennmittels zu tun hat. Eine Erhöhung des Kontaktwinkels von Wassertropfen tritt ein. Damit ist auch eine gewisse hydrophobierende Wirkung verbunden.

Im Vergleich mit Standardrezepturen zeigt sich eine verbesserte Flexibilität, d.i. eine verminderte Brüchigkeit der Waffelprodukte.

Chemisch ist das Monostearylcitrat (MSC) laut Herstellerangaben ein Gemisch von Mono- und

Distearylcitratestern, die als öllösliche Chelatbildner Wirkung zeigen. Die langen Fettsäurereste vermitteln die Öllöslichkeit, die freien Carboxylgruppen die komplexierende Wirkung.

Die CAS-Nummer ist 1337-33-3., der Schmelzpunkt beträgt 47°C, die Löslichkeit in Öle ca. 1 Gew.-%.

Das verwendete Produkt wurde von Reilly Chemicals, Brüssel, Belgien bezogen und vermahlen. Hersteller ist Morflex Inc., Greensboro, NC, USA.

In den USA gibt es u.a. folgende Zulassungen der FDA im Code of Federal Regulation (CFR), Vol 21 für Stearylcitrate:
GRAS als Komplexbildner bis zu 0,15% (CFR 182.685)
Verwendung als Weichmacher in Verpackungsstoffen für Lebensmittel (CFR 181.27)
als Weichmacher für harzartige und polymere Überzüge (CFR 175.300)
Komponenten für Papier, Pappe in Kontakt mit wäßrigen oder fettenden Lebensmitteln (CFR 176.170)

Das Einmischen des pulverförmigen Stearylcitrates - bevorzugte Korngröße kleiner 500 Mikron - erfolgt zusammen mit anderen pulverförmigen Kleinzutaten. Bei Konzentrationen von über 0,5 Gewichtsteilen Stearylcitrat auf 100 Teile Mehl wird vorteilhafterweise die Konzentration von Natriumhydrogencarbonat angehoben, um ein zu starkes Absinken des pH-Wertes der Backmassen zu vermeiden, sodaß dieser nicht unter 5,0 - vorzugsweise nicht unter 6,0 liegt.

Die Untergrenze der Wirksamkeit liegt bei 0,025 Gewichtsteilen auf 100 Teile Mehl, die Obergrenze bei etwa 5 Gewichtsteilen auf 100 Teile Mehl.

Die Erfindung wird durch die nachfolgenden Beispiele näher erläutert.

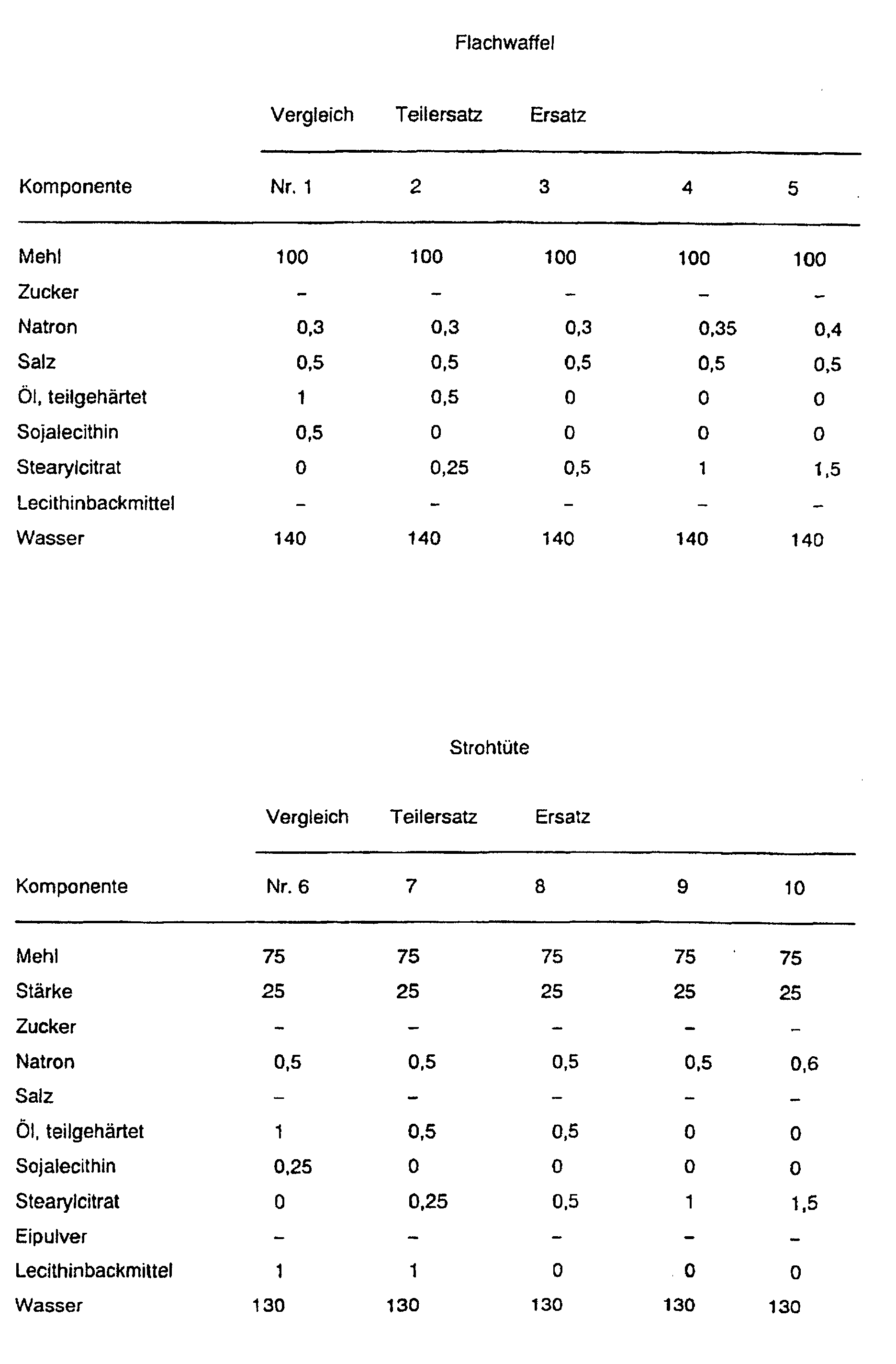

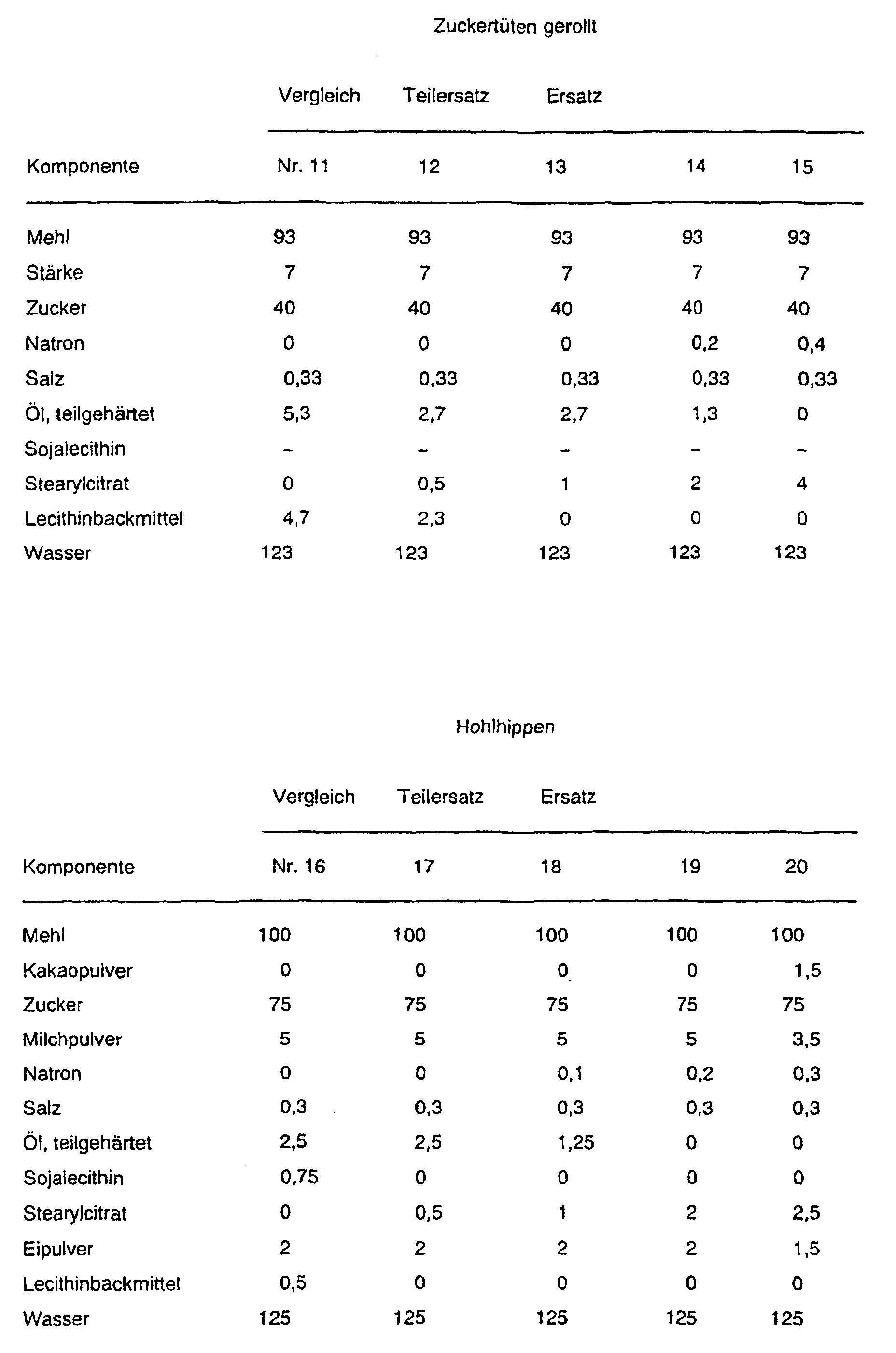

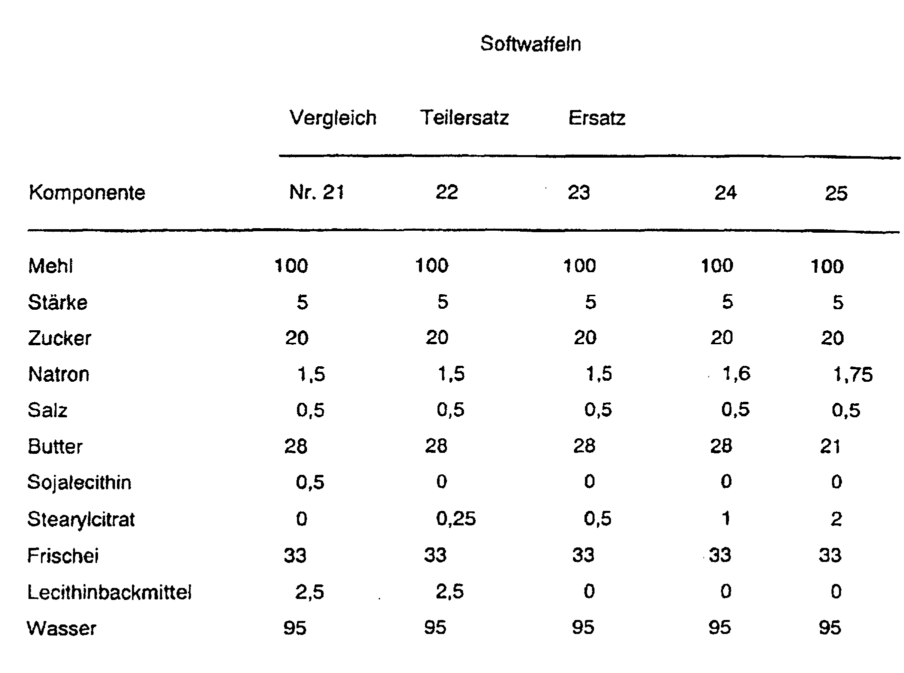

## Patentansprüche

1. Verfahren zur Herstellung von eßbaren Waffel-Produkten, die in zwei- oder mehrteiligen Backformen hergestellt werden, wie Flach- und Hohlwaffeln, Oblaten, Eistüten und Softwaffeln bzw. auf Backtrommeln oder Backbändern als Endlosband gebacken werden, wie z.B. Hohlhippen, **dadurch gekennzeichnet, daß** der Backmasse als teilweiser oder vollständiger Ersatz von Ölen und/oder Fetten und/oder Lecithin und/oder Ei- oder Sojapräparaten Monostearylcitrat zugesetzt wird.

2. Verfahren nach Anspruch 1, **dadurch gekennzeichnet, daß** Monostearylcitrat in einer Konzentration von 0,025 bis 5,0 Gew.-%, bezogen auf Mehl, eingesetzt wird, mit der Maßgabe, daß bei Konzentrationen über 0,5 Gew.-% der Gehalt an Natriumhydrogencarbonat in der Backmasse angehoben wird, um ein Absinken des pH-Wertes unter 5,0, vorzugsweise unter 6,0 zu vermeiden.

3. Verfahren nach den Ansprüchen 1 oder 2, **dadurch gekennzeichnet, daß** Monostearylcitrat mit einer Korngröße unter 500 µm eingesetzt wird.

## Claims

1. A process for manufacturing edible wafer products, manufactured in two- or multipart baking moulds, as flat and hollow wafers, host wafers, ice cream cones and waffles respectively baked on baking drums or baking belts as continuous bands, as f.i. wafer sticks, **characterized in that** to the baking batter monostearyl citrate is added as a partial or complete substitute of oils and/or fats and/or lecithin and/or egg or soya additives.

2. The process according to claim 1, **characterized in that** monostearyl citrate is used of 0,025 to 5,0 % by weight, based on flour, provided that for concentrations over 0,5 % by weight the content of sodium bicarbonate in the baking batter is raised in order to prevent a decrease in pH value below 5,0, preferably below 6,0.

3. The process according to claims 1 or 2, **characterized in that** monostearyl citrate is used of a granular size below 500 micrometer.

## Revendications

1. Procédé de fabrication de produits à gaufrette mangeables, fabriqués dans des moules de cuisson à deux ou plusieures pièces, tels comme gaufrettes plates et creuses, hosties, cornets à glace et gaufres belges, respectivement fabriqués sur des tambours ou bandes de cuisson comme une bande à pâte sans fin, tels comme cigares, **caractérisé en ce qu'**on substitue partielle- ou totalement les huiles et/ou graisses et/ou la lécithine et/ou les composants d'oeuf ou soja dans la pâte par le citrate monostéarylique.

2. Procédé selon la revendication 1, **caractérisé en ce que** le citrate monostéarylique est ajouté à la pâte à une concentration de 0,025 à 5,0 % du poids, en relation à la farine, avec la réserve, au cas de concentrations supérieures à 0,5% du poids, d'élever la teneur en bicarbonate de sodium dans la pâte, pour éviter que la valeur de pH ne tombe au-dessous de 5,0, de préférence pas au-dessous de 6,0.

3. Procédé selon les revendications 1 et 2, **caractérisé en ce que** le citrate monostéarylique employé a une granulation inférieure à 500 µm
